# FASCICULE DE BREVET EUROPEEN

(11) **EP 3 356 190 B1**
(45) Date de publication et mention de la délivrance du brevet: **11.09.2019**
(21) Numéro de dépôt: 16785202.9
(22) Date de dépôt: 22.09.2016
(51) Int. Cl.: B60T 7/08

(54) **ASSEMBLAGE D'UN HABILLAGE DE PROTECTION D'UN LEVIER DE COMMANDE**
ANORDNUNG EINER VERKLEIDUNG EINSES STEUERHEBELS
COMMAND LEVER PROTECTION SHEATING ARRANGEMENT

(30) Priorité: 28.09.2015 FR 1559120
(43) Date de publication de la demande: 08.08.2018
(73) Titulaire: Renault S.A.S., 92100 Boulogne-Billancourt (FR)
(72) Inventeur: PERRIN, Vincent, 78660 Saint Martin De Brethencourt (FR); VINCENT, Stephane, 78150 Le Chesnay (FR); COMBRAY, Romain, 75011 Paris (FR)
(86) Numéro de dépôt international: PCT/FR2016/052397
(87) Numéro de publication internationale: WO 2017/055710

(56) Documents cités:
- DE-A1- 19 935 874
- GB-A- 2 101 721
- JP-A- 2009 259 022

## Description

La présente invention concerne un assemblage d'un habillage de protection et d'un levier de commande, notamment un levier de commande de frein à main.

Les leviers de commande, notamment de frein à main, sont habituellement composés de deux parties, c'est-à-dire d'une partie inférieure présentant une embase de frein montée sur un plancher de l'habitacle et d'une partie supérieure présentant une tige de commande. Les parties supérieure et inférieure du levier de commande sont reliées entre elles par l'intermédiaire d'une articulation susceptible de pivoter autour d'un axe.

Les leviers de commande sont généralement formés en matière métallique et munis d'un habillage de protection qui entoure l'articulation du levier au voisinage du plancher pour la protéger contre des infiltrations d'eau, poussières ou autres salissures susceptibles d'empêcher son fonctionnement correct. Cet habillage de protection est souvent composé d'un soufflet en matière flexible, telle que le cuir ou un matériau polymère de type thermoplastique, et d'un moyen de fixation permettant de fixer le soufflet sur le plancher. Après fixation sur le plancher, un tapis ou une console est généralement installé sur le plancher, recouvrant souvent au moins partiellement le moyen de fixation du soufflet au plancher. L'accès à ce moyen de fixation peut dès lors s'avérer compliqué.

On connaît déjà du document de brevet japonais JP2009-259022 un habillage de protection pour un levier de vitesse comprenant d'une part un soufflet destiné à venir couvrir le levier de vitesse et d'autre part un moyen de fixation composé de trois coquilles permettant une fixation du soufflet sur le plancher par clippage. Bien que cette technique permette aux constructeurs de véhicule automobile un montage simple de l'habillage de levier de vitesse, il est nécessaire de prévoir un support spécifique pour recevoir le moyen de fixation sur le plancher de l'habitacle. L'assemblage selon le document de l'art antérieur DE 199 35 874 est caractérisé par le même désavantage. Par conséquent, il est impossible de remplacer un habillage existant par un autre habillage dans le cadre d'une réparation de véhicule. De manière générale on ne remplace le support spécifique qu'en cas de casse de celui-ci.

Il existe donc un besoin pour un assemblage d'un habillage de protection sur levier de commande, qui soit simple à monter, notamment dans le cadre d'une réparation. Il existe aussi un besoin pour un assemblage de ce type susceptible d'être monté sur des véhicules automobiles déjà existant.

Pour ce faire, la présente invention propose un assemblage d'un habillage de protection et d'un levier de commande, notamment de frein à main, d'un véhicule automobile. Le levier de commande comporte une partie supérieure de commande présentant une tige de commande et une partie inférieure destinée à être fixée sur un plancher du véhicule automobile. Les parties supérieure et inférieure de levier de commande sont reliées l'une à l'autre par l'intermédiaire d'une articulation. Ledit habillage comprend : un élément de revêtement en matière flexible destiné à venir couvrir le levier de commande au moins l'articulation et la partie inférieure du levier de commande, l'élément de revêtement se présentant sous forme d'un manchon comportant une ouverture supérieure et une ouverture inférieure, l'ouverture inférieure présentant une dimension sensiblement supérieure à la dimension de l'ouverture supérieure; une semelle solidaire de l'élément de revêtement et montée sur le contour de l'ouverture inférieure de l'élément de revêtement; et une embase de fixation sur laquelle la semelle est susceptible de venir se fixer. Selon l'invention, l'embase de fixation est aménagée de manière à être fixée sur la partie inférieure du levier de commande et à recevoir en fixation ladite semelle lorsqu'elle est fixée sur ladite partie inférieure.

Ainsi, la caractéristique de l'invention réside dans la mise en oeuvre de l'embase de fixation susceptible de venir se fixer directement sur l'embase du levier de commande et non pas sur le plancher. Par conséquent, il n'est plus nécessaire de prévoir un support spécifique sur le plancher de l'habitacle des véhicules automobiles. Ceci permet également aux réparateurs de véhicule de remplacer un habillage existant par un autre habillage sans enlever le tapis déjà installé sur le plancher.

Selon la présente invention, l'embase de fixation et la semelle peuvent être fixées à l'aide d'un moyen de fixation, par exemple d'un moyen de fixation par clippage. Au sens de l'invention le « moyen de fixation par clippage » signifie une fixation comportant un clip.

Selon l'invention, l'embase de fixation peut être montée sur la partie inférieure du levier de commande par n'importe quel moyen tant que ce moyen est simple et solide. À titre d'exemple, l'embase de fixation peut être montée par clippage sur la partie inférieure du levier de commande.

Bien évidemment, on peut prévoir un moyen de fixation supplémentaire sur l'embase de frein, par exemple un moyen de fixation par accrochage permettant de fixer l'embase de frein sur la structure de la partie inférieure du levier de commande. Ainsi, une meilleure fixation de l'embase de fixation sur la partie inférieure du levier de commande est obtenue.

De préférence, l'embase de fixation présente une surface interne destinée à être située en regard de la partie inférieure du levier de commande et une surface externe située à l'opposé de la surface interne, la surface interne présentant au moins un organe de positionnement et de maintien s'étendant en saillie vers le sens opposé à la surface externe, l'organe de positionnement et de maintien étant destiné à venir se fixer directement sur la partie inférieure du levier de commande de frein à main de manière à positionner et maintenir dans toutes les directions l'embase de fixation par rapport à la partie inférieure du levier de commande.

Selon l'invention, l'organe de positionnement et de maintien peut être une pièce séparée ou intégrée à l'embase de fixation. Dans le cas où l'organe de positionnement et de maintien est une pièce séparée, il peut être monté par exemple au moyen de vis sur l'embase de fixation.

L'embase de fixation peut présenter au moins un orifice apte à accueillir l'organe de positionnement et de maintien du levier.

De préférence, la surface interne de l'embase de fixation comporte une pluralité d'organes de positionnement et de maintien. Il est préférable qu'au moins un organe de positionnement et de maintien soit monté sur chaque face de la surface interne pour maintenir immobile dans toutes les directions l'embase de fixation par rapport à la partie inférieure du levier de commande.

De préférence, le moyen de fixation fixant l'embase de fixation et la semelle et l'organe de positionnement et de maintien peuvent être formés d'une seule pièce.

De préférence, l'embase de fixation est une coquille composée de plusieurs pièces.

De préférence, l'embase de fixation comprend une première demi-coquille et une seconde demi-coquille. La première demi-coquille et la seconde demi-coquille sont susceptibles d'être reliées l'une à l'autre de manière à ce que la partie inférieure du levier de commande soit prise en étau entre elles. Grâce à cette caractéristique, l'embase de fixation peut être retenue et fixée sur l'embase de frein par une simple force de serrage et ne nécessite pas un moyen de fixation spécifiquement adapté à la forme du levier de commande. L'embase de fixation peut ainsi s'adapter à une large gamme de voiture, ce qui permet non seulement de réduire le coût de fabrication de l'habillage mais aussi de simplifier le procédé de remplacement de l'habillage.

De surcroît, puisqu'il n'est plus nécessaire d'insérer et enfiler l'embase de fixation sur toute la longueur des parties supérieure et inférieure du levier de frein à main pour l'installer, le montage est plus simple et rapide.

De préférence, les première et seconde coquilles sont reliées l'une à l'autre par un moyen de fixation par clippage, ce qui permet un montage simple et rapide de l'habillage de protection.

De préférence, les première et seconde demi-coquilles présentent chacune sensiblement une forme de C ou U présentant deux extrémités libres. Chacune des extrémités libres est dotée d'une zone de fixation coopérant avec l'une des deux extrémités de l'autre demi-coquille également dotée d'une zone de fixation. Chaque zone de fixation est dotée d'un moyen de fixation, par exemple un moyen de fixation par clippage.

De préférence, les première et seconde demi-coquilles sont formées dans un matériau résistant tel qu'un polymère thermoplastique.

De préférence, l'élément de revêtement est un soufflet. Selon l'invention, le soufflet peut être formé en matière flexible telle que le cuir ou un matériau polymère de type thermoplastique permettant un pivotement libre de la tige de commande autour de l'articulation du levier de commande.

Selon l'invention, la semelle est montée sur le contour de l'ouverture inférieure de l'élément de revêtement. La semelle peut être fixée sur le soufflet par n'importe quel moyen tant qu'il est simple et solide. À titre d'exemple, la semelle peut être fixée sur le soufflet par agrafage ou à l'aide d'un adhésif.

De préférence, la semelle présente une surface interne et une surface externe. La surface interne présente un rebord d'accrochage étendant en saillie vers le sens opposé à la surface externe de manière à ce que le moyen de fixation de l'embase de fixation puisse venir s'accrocher sur le rebord d'accrochage. De préférence, le rebord d'accrochage est prévu sur tout le long du contour de la surface interne de semelle.

La présente invention concerne également un procédé de montage de l'assemblage d'un habillage de protection sur un levier de commande.

Selon l'invention, le procédé de montage d'un habillage de protection ci-dessus décrit, sur un levier d'un véhicule automobile comprend une première étape de mise en place de l'embase de frein sur la partie inférieure du levier de commande, une deuxième étape de fixation de l'embase de frein sur la partie inférieure du levier de commande et une troisième étape de mise en place de l'ensemble de l'élément de revêtement et de la semelle sur le levier de commande. La troisième étape comprend une étape d'insertion du levier de commande par l'ouverture inférieure de l'élément de revêtement. Le procédé comprend en outre une quatrième étape de fixation de la semelle sur l'embase de frein par clippage.

Selon l'invention, l'étape de mise en place de l'embase de frein comprend en outre une étape de mise en place des première et seconde demi-coquilles autour de la partie inférieure du levier de commande et une étape de fixation des première et seconde demi-coquilles.

Ce procédé permet aux réparateurs de véhicule de remplacer un habillage existant par un nouvel habillage sans enlever et/ou modifier le tapis déjà installé sur le plancher.

Selon une variante de l'invention, cet habillage peut également être monté avant l'installation d'un tapis d'habitacle d'un véhicule. Dans ce cas, on peut d'abord installer l'embase de fixation autour de la partie inférieure du levier de commande puis on installe un tapis, de préférence un tapis prédécoupé afin d'absorber le volume de l'embase de fixation. On peut alors laisser sortir du tapis le moyen de fixation monté sur l'embase auquel vient se fixer la semelle. Par conséquent, l'habillage de protection peut être monté sur tout type de tapis.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue en perspective d'un levier de commande sur lequel on installe un habillage de protection selon un mode d'assemblage de l'invention,
- la Figure 2 est une vue agrandie partielle d'une partie de l'habillage de protection de l'assemblage selon l'invention.

Dans la présente demande, les termes supérieur, inférieur, horizontal, vertical, font référence à une position de montage sur un véhicule de l'assemblage selon l'invention.

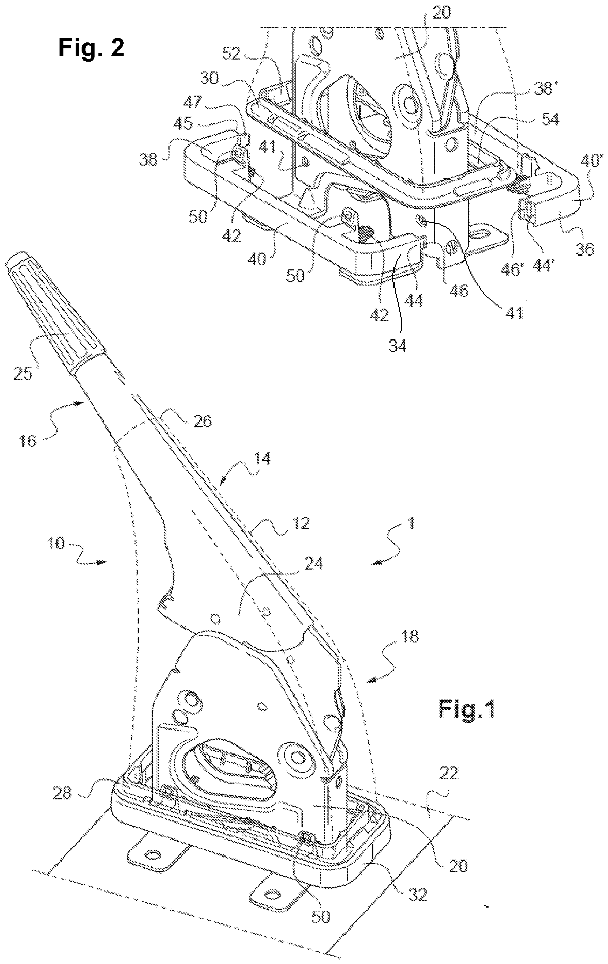

En référence aux figures 1 et 2, un levier de commande 1 d'un véhicule automobile comporte une partie supérieure de commande 14 présentant une tige de commande 16 et une partie inférieure 18 montée sur un plancher 22 du véhicule automobile. Dans le présent exemple, le levier de commande 1 est un levier de commande de frein à main. L'invention pourrait cependant être appliquée à tout autre levier de commande fixé sur un plancher de véhicule.

La partie inférieure 18 présente ici une embase de frein 20. La partie supérieure 14 et la partie inférieure 18 du levier de commande 1 sont reliées l'une à l'autre par l'intermédiaire d'une articulation 24 susceptible de s'articuler autour d'un axe. La tige de commande 16 est alors mobile en pivotement autour de l'axe entre une position de freinage et une position de déblocage. La partie supérieure 14 du levier de commande présente une section droite dont le diamètre s'agrandit progressivement jusqu'au niveau de l'articulation 24. Une poignée 25 est montée au voisinage de l'extrémité libre de la tige de commande 16.

La figure 1 montre un habillage de protection 10 monté sur le levier de commande 1. L'habillage de protection 10 présente un soufflet 12 comme élément de revêtement lequel vient couvrir une partie de la tige de commande 16, l'articulation 24 et la partie inférieure 18 du levier de frein à main 1. Le soufflet 12 est formé dans une matière élastiquement déformable telle que le cuir ou un matériau polymère de type thermoplastique. Le soufflet 12 se présente sous forme d'un manchon comportant une ouverture supérieure 26 et une ouverture inférieure 28.

L'ouverture inférieure 28 présente une dimension sensiblement supérieure à celle l'ouverture supérieure 26. Le diamètre de l'ouverture supérieure 26 est sensiblement supérieur au diamètre le moins important de la section droite du levier de commande 16 pour qu'on puisse faire sortir au moins une partie de la tige de commande 16 par l'ouverture supérieure 26. La dimension de l'ouverture inférieure 28 est sensiblement supérieure à la dimension la plus importante de la section droite de la partie inférieure 18 du levier de commande pour que le soufflet 12 puisse couvrir entièrement la partie inférieure 18 du levier de commande 1.

L'habillage de protection 10 comporte une semelle 30 montée sur le contour de l'ouverture inférieure 28 de l'élément de revêtement 12. La semelle 30 est formée en matière relativement résistante telle qu'une matière thermoplastique. La semelle 30 et le soufflet 12 sont fixés entre eux par agrafage ou par adhésif. La semelle 30 est formée de telle manière qu'un moyen de fixation par clippage 50 d'une embase de fixation 32, qu'on décrira ci-après, puisse s'accrocher. Ici, la semelle 30 présente une surface externe 51 et une surface interne 52 sur laquelle est aménagé un rebord d'accrochage 54 sur tout le long du contour.

L'assemblage du levier de commande 1 et de l'habillage de protection 10 comporte une embase de fixation 32 composée d'une première demi-coquille 34 et seconde demi-coquille 36. La première demi-coquille 34 et la seconde demi-coquille 36 sont munies d'une pluralité de moyens de fixation par clippage s'étendant en saillie vers la semelle 30, susceptible de s'accrocher sur la semelle 30.

La première demi-coquille 34 et la seconde demi-coquille 36 présentent chacune une forme de C ou de U susceptible de former ensemble une seule coquille de telle manière à venir prendre en sandwich la partie inférieure 18 du levier de commande 1 au voisinage du plancher 22. Chaque demi-coquille 34, 36 comprend deux extrémités libres opposées 44, 44', 45 sur lesquelles sont prévus un moyen de fixation par clippage 46, 46', 47 coopérant avec le moyen de fixation par clippage 46, 46', 47 monté sur l'extrémité libre 44, 44', 45 de l'autre demi-coquille 34, 36.

Chacune des demi-coquilles 34, 36 présente d'une part une surface interne 38, 38' située en regard de la partie inférieure 18 du levier de commande 1 et d'autre part une surface externe 40, 40' située à l'opposé de la surface interne. La surface interne 38, 38' présente au moins un organe de positionnement et de maintien 42 s'étendant en saillie vers le sens opposé à la surface externe 40. L'organe de positionnement et de maintien 42 vient alors s'insérer dans un orifice 41 formé sur la partie inférieure 18 du levier de commande 1 de manière à positionner et maintenir l'embase de fixation 32 par rapport à la partie inférieure 18 du levier de commande 1 lorsque les première et seconde demi-coquilles 34, 36 sont assemblées autour de la partie inférieure 18 du levier de commande 1.

Ici, l'embase de fixation 32, l'organe de positionnement et de maintien 42 et le moyen de fixation par clippage sont formés d'une seule pièce.

On décrira à présent, en référence aux Figures 1 et 2, un mode de montage de l'habillage de protection 10.

Comme le montre la figure 2, on indexe d'abord la première demi-coquille 34 et la seconde demi-coque 36 sur le plancher 22 autour de la partie inférieure 18 du levier de commande 1 en insérant les organes de de positionnement et de maintien 42 à l'intérieur des orifices 41 correspondants. On fixe ensuite le moyen de fixation par clippage 46 de la première demi-coquille 34 au moyen de fixation par clippage 46' monté sur l'extrémité libre 44' de la seconde demi-coquille 36. Ensuite, on fixe le moyen de fixation par clippage 47 monté sur l'autre extrémité libre 45 de la première demi-coquille 34 au moyen de fixation par clippage (non représenté) monté sur l'autre extrémité libre (non représenté) de la seconde demi-coquille 36 en assemblant les deux demi-coquilles 34, 36.

Étant donné que les organes de positionnement et de maintien 42 viennent se fixer sur des surfaces de l'embase de frein 20, l'embase de fixation 32 est maintenue immobile par rapport à l'embase de frein 20.

Une fois l'embase de fixation 32 installée, on met en place le soufflet 12 solidaire de la semelle 30 sur le levier de commande 1. On insère la tige de commande 16 à l'intérieur du soufflet 12 par l'ouverture inférieure 28 du soufflet 12 sur laquelle la semelle 30 est montée et on l'enfile jusqu'à ce que la semelle 30 soit en contact avec l'embase de fixation 32. Ensuite, on fixe la semelle 30 sur l'embase de fixation 32 à l'aide des moyens de fixation par clippage 50 de l'embase de fixation 32 qui vient s'accrocher sur le rebord d'accrochage 54. Une partie de la partie supérieure 14, la partie inférieure 18 et l'articulation 24 du levier de commande est alors recouvert du soufflet 12.

## Revendications

1. Assemblage d'un habillage de protection (10) et d'un levier de commande (1), notamment de frein à main, d'un véhicule automobile,
- ledit levier de commande (1) comportant une partie supérieure (14) de commande présentant une tige de commande (16) et une partie inférieure (18) destinée à être fixée sur un plancher (22) du véhicule automobile, lesdites parties supérieure (14) et inférieure (18) de levier de commande étant reliées l'une à l'autre par l'intermédiaire d'une articulation (24),
- ledit habillage (10) comprenant :
- un élément de revêtement (12) en matière flexible destiné à venir couvrir le levier de commande (10) au moins l'articulation (24) et la partie inférieure (18) du levier de commande (1), l'élément de revêtement (12) se présentant sous forme d'un manchon comportant une ouverture supérieure (26) et une ouverture inférieure (28), l'ouverture inférieure (28) présentant une dimension sensiblement supérieure à la dimension de l'ouverture supérieure (26);
- une semelle (30) solidaire de l'élément de revêtement (12) et montée sur le contour de l'ouverture inférieure (28) de l'élément de revêtement (12); et
- une embase de fixation (32) sur laquelle la semelle (30) est susceptible de venir se fixer;
**caractérisé en ce que** l'embase de fixation (32) est aménagée de manière à être fixée indépendamment du plancher (22) sur la partie inférieure (18) du levier de commande (1) et à recevoir en fixation ladite semelle (30) lorsqu'elle est fixée sur ladite partie inférieure (18) du levier de commande (1).

2. Assemblage selon la revendication 1, **caractérisé en ce que** ladite embase de fixation (32) présente une surface interne (38, 38') située en regard de la partie inférieure (18) du levier de commande (1) et une surface externe (40, 40') située à l'opposé de la surface interne (38, 38'), la surface interne (38, 38') présentant au moins un organe de positionnement et de maintien (42) s'étendant en saillie vers le sens opposé à la surface externe (40), l'organe de positionnement et de maintien (42) étant destiné à venir se fixer sur la partie inférieure (18) du levier de commande (1) de manière à positionner et maintenir l'embase de fixation (32) par rapport à la partie inférieure du levier de commande (1).

3. Assemblage selon la revendication 1 ou 2, **caractérisé en ce que** l'embase de fixation (32) comprend une première demi-coquille (34) et une seconde demi-coquille (36) susceptibles d'être reliées l'une à l'autre de manière que la partie inférieure (18) du levier de commande (1) soit prise en étau entre les première et les seconde demi-coquilles (34, 36).

4. Assemblage selon la revendication 3, **caractérisé en ce que** la première demi-coquille (34) et la seconde demi-coquille (36) sont reliées l'une à l'autre par un moyen de fixation par clippage (46, 46', 47).

5. Assemblage selon la revendication 4, **caractérisé en ce que** chacune des demi-coquilles (34, 36) présente une forme en C présentant deux extrémités libres opposées (44, 44', 45), chacune des extrémités libres (44, 44', 45) est munie dudit moyen de fixation par clippage (46, 46', 47) coopérant avec l'une des extrémités (44, 44', 45) de l'autre demi-coquille (34, 36).

6. Assemblage selon l'une quelconque des revendications précédentes, **caractérisé en ce que** l'élément de revêtement (12) est un soufflet.

7. Assemblage selon l'une quelconque des revendications 2 à 6, **caractérisé en ce que** l'organe de positionnement et de maintien (42) et le moyen de fixation par clippage (50) sont formés d'une seule pièce.

8. Assemblage selon l'une quelconque des revendications précédentes **caractérisé en ce que** la semelle (30) présente une surface externe (51) et une surface interne (52), la surface interne (52) présentant un rebord d'accrochage (54) étendant en saillie vers le sens opposé à la surface externe de manière à ce que ledit moyen de fixation (50) de l'embase de fixation (32) vienne s'accrocher sur le rebord d'accrochage (54).

9. Procédé de montage de l'assemblage selon l'une quelconque des revendications précédentes, d'un habillage de protection (10) sur un levier de commande (1), comprenant :
- une étape de mise en place de l'embase de fixation (32) sur la partie inférieure (18) du levier de commande (1) indépendamment d'un plancher (22);
- une étape de fixation de l'embase de fixation (32) sur la partie inférieure (18) du levier de commande (1) ;
- une étape de mise en place de l'élément de revêtement (12) solidaire de la semelle (30) sur le levier de commande (1) comprenant une étape d'insertion du levier de commande (1) à l'intérieur de l'élément de revêtement (12) par l'ouverture inférieure (28) de l'élément de revêtement (12);
- une étape de fixation de la semelle (30) sur l'embase de fixation.

10. Procédé de montage selon la revendication précédente, dans lequel l'étape de mise en place de l'embase de frein (20) comprend en outre :
- une étape de mise en place des première et seconde demi-coquilles (34, 36) autour de la partie inférieure du levier de commande (1); et
- une étape de fixation des première et seconde demi-coquilles (34, 36) de manière de façon que la partie inférieure (18) du levier de commande (1) soit prise en étau entre les première et les seconde demi-coquilles (34, 36).

## Patentansprüche

1. Anordnung einer Schutzverkleidung (10) und eines Steuerhebels (1), insbesondere einer Handbremse, eines Kraftfahrzeugs,
- wobei der Steuerhebel (1) einen oberen Steuerteil (14), der eine Steuerstange (16) aufweist, und einen unteren Teil (18), der zur Befestigung auf einem Boden (22) des Kraftfahrzeugs bestimmt ist, aufweist, wobei der obere (14) und untere (18) Steuerhebelteil mittels eines Gelenks (24) miteinander verbunden sind,
- wobei die Verkleidung (10) umfasst:
- ein Überzugselement (12) aus flexiblem Material, das zum Abdecken des Steuerhebels (10), mindestens des Gelenks (24) und des unteren Teils (18) des Steuerhebels (1) bestimmt ist, wobei das Überzugselement (12) in Form einer Hülse vorliegt, aufweisend eine obere Öffnung (26) und eine untere Öffnung (28), wobei die untere Öffnung (28) eine Abmessung aufweist, die deutlich größer als die Abmessung der oberen Öffnung (26) ist;
- eine Sohle (30), die mit dem Überzugselement (12) fest verbunden ist und auf dem Umfang der unteren Öffnung (28) des Überzugselements (12) angebracht ist; und
- eine Befestigungsbasis (32), auf welcher die Sohle (30) befestigbar ist;
**dadurch gekennzeichnet, dass** die Befestigungsbasis (32) derart eingerichtet ist, dass sie unabhängig vom Boden (22) auf dem unteren Teil (18) des Steuerhebels (1) befestigt wird und dass auf ihr die Sohle (30) befestigbar ist, wenn sie auf dem unteren Teil (18) des Steuerhebels (1) befestigt ist.

2. Anordnung nach Anspruch 1, **dadurch gekennzeichnet, dass** die Befestigungsbasis (32) eine innere Fläche (38, 38') aufweist, die dem unteren Teil (18) des Steuerhebels (1) zugewandt ist, und eine äußere Fläche (40, 40'), die sich gegenüber der inneren Fläche (38, 38') befindet, wobei die innere Fläche (38, 38') mindestens ein Positionierungs- und Halteorgan (42) aufweist, das in entgegengesetzter Richtung zu der äußeren Fläche (40) hervorsteht, wobei das Positionierungs- und Halteorgan (42) derart zur Befestigung auf dem unteren Teil (18) des Steuerhebels (1) bestimmt ist, dass die Befestigungsbasis (32) in Bezug auf den unteren Teil des Steuerhebels (1) positioniert und gehalten wird.

3. Anordnung nach Anspruch 1 oder 2, **dadurch gekennzeichnet, dass** die Befestigungsbasis (32) eine erste Halbschale (34) und eine zweite Halbschale (36) umfasst, die derart miteinander verbindbar sind, dass der untere Teil (18) des Steuerhebels (1) zwischen der ersten und zweiten Halbschale (34, 36) eingeklemmt ist.

4. Anordnung nach Anspruch 3, **dadurch gekennzeichnet, dass** die erste Halbschale (34) und die zweite Halbschale (36) durch ein Rastbefestigungsmittel (46, 46', 47) miteinander verbunden sind.

5. Anordnung nach Anspruch 4, **dadurch gekennzeichnet, dass** jede der Halbschalen (34, 36) eine C-Form aufweist, aufweisend zwei gegenüberliegende freie Enden (44, 44', 45), wobei jedes der freien Enden (44, 44', 45) mit dem Rastbefestigungsmittel (46, 46', 47) ausgestattet ist, das mit einem der Enden (44, 44', 45) der anderen Halbschale (34, 36) zusammenwirkt.

6. Anordnung nach einem der vorangehenden Ansprüche, **dadurch gekennzeichnet, dass** das Überzugselement (12) ein Balg ist.

7. Anordnung nach einem der Ansprüche 2 bis 6, **dadurch gekennzeichnet, dass** das Positionierungs- und Halteorgan (42) und das Rastbefestigungsmittel (50) aus einem einzigen Teil gebildet sind.

8. Anordnung nach einem der vorangehenden Ansprüche, **dadurch gekennzeichnet, dass** die Sohle (30) eine äußere Fläche (51) und eine innere Fläche (52) aufweist, wobei die innere Fläche (52) einen Klammerrand (54) aufweist, der in der zu der äußeren Fläche entgegengesetzten Richtung derart hervorsteht, dass sich das Befestigungsmittel (50) der Befestigungsbasis (32) auf dem Klammerrand (54) festklammert.

9. Montageverfahren der Anordnung nach einem der vorangehenden Ansprüche einer Schutzverkleidung (10) auf einem Steuerhebel (1), umfassend:
- einen Schritt des Platzierens der Befestigungsbasis (32) auf dem unteren Teil (18) des Steuerhebels (1) unabhängig von einem Boden (22);
- einen Schritt des Befestigens der Befestigungsbasis (32) auf dem unteren Teil (18) des Steuerhebels (1);
- einen Schritt des Platzierens des fest mit der Sohle (30) verbundenen Überzugselements (12) auf dem Steuerhebel (1), umfassend einen Schritt des Einsetzens des Steuerhebels (1) in das Innere des Überzugselements (12) durch die untere Öffnung (28) des Überzugselements (12) ;
- einen Schritt des Befestigens der Sohle (30) auf der Befestigungsbasis.

10. Montageverfahren nach dem vorangehenden Anspruch, wobei der Schritt des Platzierens der Bremsenbasis (20) ferner umfasst:
- einen Schritt des Platzierens der ersten und zweiten Halbschale (34, 36) um den unteren Teil des Steuerhebels (1); und
- einen Schritt des Befestigens der ersten und zweiten Halbschale (34, 36) derart, dass der untere Teil (18) des Steuerhebels (1) zwischen der ersten und der zweiten Halbschale (34, 36) eingeklemmt wird.

## Claims

1. Assembly of a protective sheath (10) and of a control lever (1), notably a handbrake lever, of a motor vehicle,
- the said control lever (1) comprising a control upper part (14) having a control rod (16) and a lower part (18) intended to be fixed to a floor (22) of the motor vehicle, the said control lever upper (14) and lower (18) parts being joined to one another via an articulation (24),
- the said sheathing (10) comprising:
- a covering element (12) made of a flexible material intended to cover the control lever (10) at least the articulation (24) and the lower part (18) of the control lever (1), the covering element (12) taking the form of a sleeve comprising an upper opening (26) and a lower opening (28), the lower opening (28) having a dimension substantially greater than the dimension of the upper opening (26);
- a sole (30) secured to the covering element (12) and mounted on the periphery of the lower opening (28) of the covering element (12); and
- a fixing base (32) to which the sole (30) can be fixed;
**characterized in that** the fixing base (32) is arranged in such a way as to be fixed independently of the floor (22) to the lower part (18) of the control lever (1) and have, fixed to it, the said sole (30) when it is fixed to the said lower part (18) of the control lever (1).

2. Assembly according to Claim 1, **characterized in that** the said fixing base (32) has an internal surface (38, 38') situated facing the lower part (18) of the control lever (1) and an external surface (40, 40') situated on the opposite side to the internal surface (38, 38'), the internal surface (38, 38') having at least one positioning and retaining member (42) projecting out in the opposite direction to the external surface (40), the positioning and retaining member (42) being intended to become fixed to the lower part (18) of the control lever (1) in such a way as to position and retain the fixing base (32) with respect to the lower part of the control lever (1).

3. Assembly according to Claim 1 or 2, **characterized in that** the fixing base (32) comprises a first half-shell (34) and a second half-shell (36) which can be joined together in such a way that the lower part (18) of the control lever (1) is clamped between the first and second half-shells (34, 36).

4. Assembly according to Claim 3, **characterized in that** the first half-shell (34) and the second half-shell (36) are joined together by a clip-fastening means (46, 46', 47).

5. Assembly according to Claim 4, **characterized in that** each of the half-shells (34, 36) is in the shape of a C having two opposite free ends (44, 44', 45), each of the free ends (44, 44', 45) is equipped with the said clip-fastening means (46, 46', 47) collaborating with one of the ends (44, 44', 45) of the other half-shell (34, 36).

6. Assembly according to any one of the preceding claims, **characterized in that** the covering element (12) is a gaiter.

7. Assembly according to any one of Claims 2 to 6, **characterized in that** the positioning and retaining member (42) and the clip-fastening means (50) are formed as a single piece.

8. Assembly according to any one of the preceding claims, **characterized in that** the sole (30) has an external surface (51) and an internal surface (52), the internal surface (52) having a connecting rim (54) projecting out in the opposite direction to the external surface so that the said fastening means (50) of the fixing base (32) catches on the catching rim (54).

9. Method for assembling the assembly according to any one of the preceding claims, of a protecting sheathing (10) on a control lever (1), comprising:
- a step of fitting the fixing base (32) on the lower part (18) of the control lever (1) independently of a floor (22);
- a step of fixing the fixing base (32) to the lower part (18) of the control lever (1);
- a step of fitting the covering element (12) secured to the sole (30) on the control lever (1), involving a step of inserting the control lever (1) inside the covering element (12) via the lower opening (28) of the covering element (12);
- a step of fixing the sole (30) to the fixing base.

10. Assembly method according to the preceding claim, in which the step of fitting the brake base (20) further comprises:
- a step of fitting first and second half-shells (34, 36) around the lower part of the control lever (1); and
- a step of fixing the first and second half-shells (34, 36) in such a way that the lower part (18) of the control lever (1) is clamped between the first and second half-shells (34, 36).
